# EUROPEAN PATENT SPECIFICATION

(11) **EP 3 354 932 B1**
(45) Date of publication and mention of the grant of the patent: **29.05.2024**
(21) Application number: 16848587.8
(22) Date of filing: 20.09.2016
(51) Int. Cl.: F16H 25/22, F16H 9/12, F16H 63/06

(54) **BALL SCREW**
KUGELSCHRAUBE
VIS À BILLES

(30) Priority: 24.09.2015 JP 2015187525
(43) Date of publication of application: 01.08.2018
(73) Proprietor: NTN Corporation, Osaka-shi, Osaka 550-0003 (JP)
(72) Inventor: SHIMIZU, Tatsunori, Iwata-shi Shizuoka 438-8510 (JP)
(74) Representative: Grünecker Patent- und Rechtsanwälte PartG mbB
(86) International application number: PCT/JP2016/077701
(87) International publication number: WO 2017/051799

(56) References cited:
- EP-B1- 1 914 447
- DE-A1- 3 628 621
- GB-A- 2 361 045
- JP-A- 2001 132 811
- JP-A- 2012 077 871
- US-A1- 2013 133 453

## Description

### TECHNICAL FIELD

The present invention relates to a ball screw. Specifically, the present invention relates to a deflector-type ball screw used for driving gear ratio-change pulleys of a continuously variable transmission, for example.

### BACKGROUND ART

Conventionally, there are belt-type continuously variable transmissions (CVT) which use a ball screw to move a movable sheave of a pulley, around which a drive belt is wound, in an axial direction of a rotation axis. A belt-type continuously variable transmission including a ball screw translates a rotational motion of a speed-change motor to a linear motion by the ball screw, and moves the movable sheave of the pulley in the axial direction. At this time, a combination of an axial load, a radial load, and a moment load is applied to the ball screw from the speed-change motor and the pulley. In the case of a deflector-type ball screw, balls passing through a raceway formed in a deflector member cannot receive a radial load, a moment load, or the like, due to the structure of the deflector member. Accordingly, in the deflector-type ball screw, when a radial load or a moment load is applied in a phase direction of the deflector, an excessive bearing stress is generated in a connection part between the raceway of the deflector member and a raceway of a threaded shaft or a nut, whereby durability of the connection part may be lowered. Against this background, a deflector-type ball screw including a deflector member having a plurality of connection grooves (raceways) has been known. Patent Document 1 describes an example of this structure. A further example of a deflector-type ball screw is disclosed in Patent Document 2.

A deflector-type ball screw described in Patent Document 1 is configured of a ball screw shaft having an outer raceway on an outer peripheral surface thereof, a rotary nut having an inner raceway on an inner peripheral surface thereof, and a plurality of balls. The ball screw shaft is inserted into the rotary nut, and the plurality of balls are arranged in a rolling track configured of the outer raceway and the inner raceway. In the deflector-type ball screw, a single deflector member is provided in the rotary nut. The deflector member has a plurality of connection grooves that connect adjacent single lap parts of the inner raceway constituting the rolling track and form a circling path. Each connection groove is configured to form a circling path from different rolling tracks. Accordingly, the rolling track is configured of a plurality of circling paths within the axial length of the deflector member. Thus, since the circling path is formed of a single deflector member, the number of parts for the deflector-type ball screw can be reduced and the dimension in the axial direction can be reduced. However, since a plurality of circling paths are provided in the deflector member of the technique described in Patent Document 1, the area incapable of receiving radial loads and moment loads is increased. Hence, if the deflector member is provided on the rotary side where radial loads and moment loads are applied, durability of the deflector-type ball screw against radial loads and moment loads may be limited by the deflector member.

### PRIOR ART DOCUMENT

### PATENT DOCUMENT

Patent Document 1: JP-A 2001-132811 Gazette
Patent Document 2: GB 2 361 045 A

### SUMMARY OF THE INVENTION

### PROBLEMS TO BE SOLVED BY THE INVENTION

The present invention has been made in view of the above circumstances, and aims to provide a deflector-type ball screw that can improve durability against radial loads and moment loads, without enlarging an overall form or providing a plurality of deflector members.

### SOLUTIONS TO THE PROBLEMS

A ball screw of the present invention is defined in independent claim 1. Preferred embodiments are laid down in the dependent claims.

In the ball screw of the present invention, it is preferable that a center of length of the plurality of circulation grooves be placed on a straight line that forms a predetermined angle with respect to a shaft center of the threaded shaft.

In the ball screw of the present invention, it is preferable that a center of length of the plurality of circulation grooves be placed on a straight line that forms an arbitrary angle not smaller than 20 degrees and not larger than 60 degrees, with respect to a shaft center of the threaded shaft.

### EFFECTS OF THE INVENTION

According to the ball screw of the present invention, since the circulation groove formed in the deflector member and the raceway formed in the threaded shaft or the nut are adjacent in the axial direction, it is possible to reduce the circumferential width of a part where only circulation grooves are arranged adjacent to each other in the axial direction of the threaded shaft. In other words, since the raceway of the threaded shaft or nut adjacent to the circulation groove shares the load applied on the connection part of the rolling surface of the threaded shaft or nut and the deflector member, load distribution of the raceway becomes almost even. Hence, durability against radial loads and moment loads can be improved without enlarging the overall form or providing a plurality of deflector members.

### BRIEF DESCRIPTION OF THE DRAWINGS

Fig. 1 is a cross-sectional view illustrating a configuration of a ball screw part when a movable sheave is close to a fixed sheave, in an embodiment of a belt-type continuously variable transmission including a ball screw of the present invention.
Fig. 2 is a cross-sectional view illustrating the configuration of the ball screw part when the movable sheave is spaced apart from the fixed sheave, in the belt-type continuously variable transmission including the ball screw of the present invention.
Fig. 3(A) is a partial cross-sectional view of the center of circulation grooves of a deflector member provided in a threaded shaft of the ball screw of the first embodiment of the present invention, and Fig. 3(B) is a plan view illustrating arrangement of the circulation grooves of the deflector member provided in the ball screw shaft.
Fig. 4 is a plan view illustrating an arrangement of circulation grooves of a deflector member provided in a threaded shaft of a ball screw of a second embodiment of the present invention.
Fig. 5 is a plan view illustrating an arrangement of circulation grooves of a deflector member provided in a threaded shaft of a ball screw of a third embodiment of the present invention.
Fig. 6 is a cross-sectional view illustrating a configuration of a ball screw part when a movable sheave is close to a fixed sheave, in another embodiment of the belt-type continuously variable transmission including the ball screw of the present invention.

### EMBODIMENT OF THE INVENTION

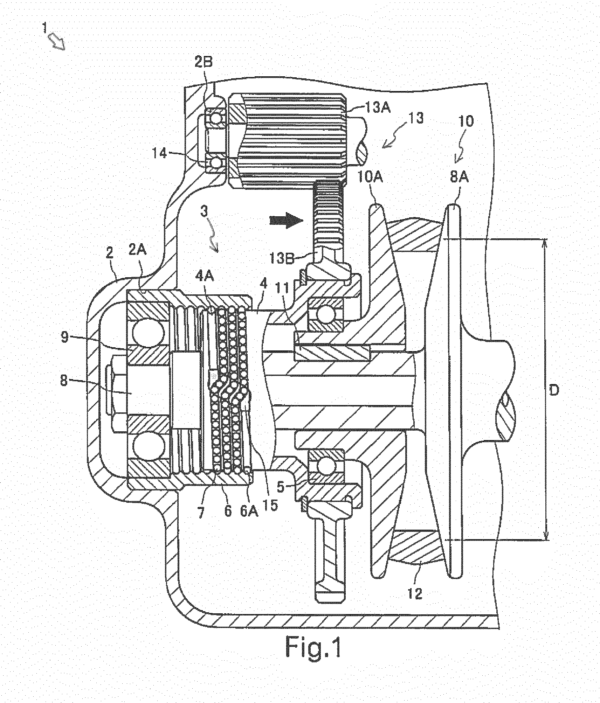

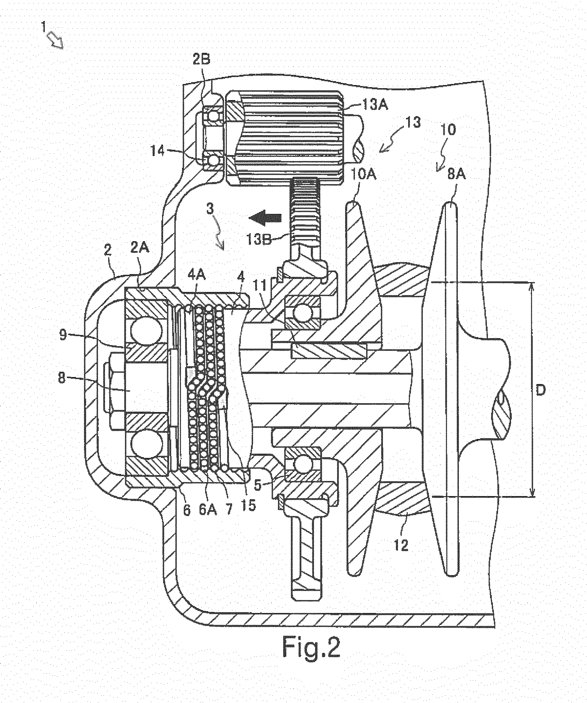

Hereinafter, a description will be given, with reference to Figs. 1 and 2, of a belt-type continuously variable transmission 1 which is an embodiment of a belt-type continuously variable transmission (CVT) including a ball screw 3 of the present invention.

As shown in Fig. 1, the belt-type continuously variable transmission 1 is configured to change a speed reduction ratio by steplessly changing a winding diameter D of a drive belt 12, which is wound around a pulley 10. The belt-type continuously variable transmission 1 includes a casing 2, a ball screw 3 which is a direct-acting mechanism, a drive shaft 8, the pulley 10, the drive belt 12, and a gear reducer 13. The belt-type continuously variable transmission 1 is configured such that a movable sheave 10A of the pulley 10 is movable to an arbitrary position by controlling the movement of an unillustrated electric motor. Note that although the drive shaft 8 is connected to an unillustrated engine such as an engine or the like in an embodiment described below, the present invention is not limited to this.

The casing 2 is a main structural member of the belt-type continuously variable transmission 1. The casing 2 is formed of an aluminum alloy or die-cast such as A6061 and ADC12. The aluminum alloy or die-cast that forms the casing 2 is subjected to a heat treatment including: a solution treatment in which the aluminum alloy or die-cast is heated to a high temperature to form a solid solution; a quenching treatment in which the solid solution is rapidly cooled in water; and an age hardening treatment (tempering treatment) in which the solid solution is kept at a room temperature or heated to a low temperature (100 to 200°C) to allow precipitation thereof. With this heat treatment, the aluminum alloy or die-cast undergoes a precipitation hardening treatment in which a large lattice strain is generated in a precipitate phase for hardening thereof. Hence, the casing 2 can be produced on a larger scale to reduce cost. Additionally, the strength of the casing 2 can be increased, so that less aluminum is used, and weight reduction can be achieved. The ball screw 3, the drive shaft 8, the pulley 10, the drive belt 12, the gear reducer 13, and the like are provided in the casing 2.

The casing 2 is provided with a nut holder 2A and a drive gear-ball bearing holder 2B of the gear reducer 13. The nut holder 2A is one side surface of the casing 2, and is formed into a hollow bottomed cylindrical shape that can hold a later-mentioned nut 6 of the ball screw 3. The drive gear-ball bearing holder 2B is one side surface of the casing 2, and is formed into a hollow bottomed cylindrical shape that can hold a later-mentioned drive gear-ball bearing 14 that supports a drive gear 13A of the gear reducer 13.

The ball screw 3 is configured to translate a rotational motion to a linear motion. The ball screw 3 is configured of a threaded shaft 4, the nut 6, a plurality of balls 7, a deflector member 15, and the like, for example.

The threaded shaft 4 is made of a medium carbon steel land part S55C or a case hardening steel such as SCM415 and SCM420, and is cured to about 55 to 62 HRC by induction quenching and low-pressure carburizing. The threaded shaft 4 is formed into a hollow cylinder. A single-threaded shaft-side raceway 4A formed of a right-hand thread that allows the balls 7 to roll on the outer peripheral surface of the threaded shaft 4, is formed on one side (casing 2 side) of the threaded shaft 4. A threaded shaft-ball bearing 5 that has an enlarged inner diameter and supports the threaded shaft 4, is provided on an end on the other side (pulley 10 side) of the threaded shaft 4. An outer ring of the threaded shaft-ball bearing 5 is fixed to an enlarged-diameter part of the threaded shaft 4. That is, the outer ring of the threaded shaft-ball bearing 5 is configured to be integrally rotatable with and around the axis of the threaded shaft 4, and to be immovable in the axial direction. The deflector member 15 is provided in a part of the outer peripheral surface on which the shaft-side raceway 4A of the threaded shaft 4 is formed. The deflector member 15 is configured such that the balls 7 climb over a land part of a nut-side raceway 6A of the nut 6, and return to the same nut-side raceway 6A.

The nut 6 is formed into a hollow cylinder that allows insertion of the threaded shaft 4. The nut 6 is made of a case hardening steel such as SCM415 and SCM420, and is cured to about 55 to 62 HRC by low-pressure carburizing. The nut-side raceway 6A that allows the balls 7 to roll on the inner peripheral surface thereof is formed with the same lead and pitch as the shaft-side raceway 4A of the threaded shaft 4, on one side (pulley 10 side) of the nut 6. A drive shaft-ball bearing 9 that supports the drive shaft 8 on the inner periphery thereof is provided on the other side (casing 2 side) of the nut 6. The other side of the nut 6 is tightly fitted into the nut holder 2A of the casing 2, and is fixed to the casing 2. The threaded shaft 4 is inserted into the nut 6, so that the shaft-side raceway 4A and the nut-side raceway 6A face each other. The ball screw 3 is formed into a hollow cylinder configured of the hollow cylindrical threaded shaft 4 and the hollow cylindrical nut 6. The plurality of balls 7 are stored in a freely rollable manner in the rolling track configured of the shaft-side raceway 4A and the nut-side raceway 6A. The nut 6 supports the threaded shaft 4 through the plurality of balls 7, so that the threaded shaft 4 is freely rotatable around the axis of the nut 6.

Although the shaft-side raceway 4A of the threaded shaft 4 and the nut-side raceway 6A of the nut 6 are single-threaded in the present embodiment, the present invention is not limited to this. In addition, while the sectional shape of the shaft-side raceway 4A and the nut-side raceway 6A may be formed into a circular arch or a gothic arch, in the present embodiment, the sectional shape is formed into a gothic arch in which a large angle of contact with the ball 7 can be formed and a small axial internal clearance can be set. This improves rigidity against axial loads, and can suppress occurrence of vibration.

In the ball screw 3 configured in this manner, the fitting part on the other side of the nut 6 is tightly fitted into the nut holder 2A of the casing 2, and is held to be incapable of rotating relative to the casing 2. The ball screw 3 is configured such that when the threaded shaft 4 is rotated, the rotary force is transmitted to the nut 6 through the plurality of balls 7 stored in the rolling track. Since the nut 6 is fixed to the casing 2, the inclination of the shaft-side raceway 4A translates the rotational motion of the threaded shaft 4 to a linear motion in the axial direction of the threaded shaft 4. Thus, the threaded shaft 4 of the ball screw 3 moves in the axial direction of the threaded shaft 4, inside the casing 2.

The drive shaft 8 is configured to transmit power from an unillustrated engine or the like to an unillustrated transmission or the like. A fixed sheave 8A that constitutes the pulley 10 is formed integrally with an intermediate part of the drive shaft 8. The drive shaft 8 is inserted into the hollow cylindrical ball screw 3, and has an end on one side fitted into the drive shaft-ball bearing 9. In other words, the drive shaft 8 is supported by the drive shaft-ball bearing 9 in such a manner as to be rotatable relative to the casing 2 and the nut 6 of the ball screw 3, inside the threaded shaft 4 and the nut 6. An unillustrated end on the other side of the drive shaft 8 is connected to the unillustrated engine or the like.

The pulley 10 is configured to change the rotation speed of power from the drive belt 12 or power from the drive shaft 8. The pulley 10 is configured of the fixed sheave 8A and the movable sheave 10A of the drive shaft 8. The fixed sheave 8A is formed of the intermediate part of the drive shaft 8 radially protruding in a flange shape. In cross-sectional view parallel to the drive shaft 8, the fixed sheave 8A is formed into a tapered shape whose one side surface on the ball screw side gradually comes close to the other side surface from the center toward the outer edge. The movable sheave 10A is formed of an end on one side of a hollow cylindrical boss member radially protruding in a flange shape. In cross-sectional view parallel to the drive shaft 8, the movable sheave 10A is formed into a tapered shape in which one side surface of the flange member gradually comes close to the other side surface from the center toward the outer edge. The drive shaft 8 is inserted into the movable sheave 10A through a sliding key 11. At this time, the movable sheave 10A is arranged such that the tapered one side surface faces the tapered one side surface of the fixed sheave 8A. Thus, the movable sheave 10A is supported by the drive shaft 8 in such a manner as to be integrally rotatable with the drive shaft 8, and movable in the axial direction of the drive shaft 8. Additionally, the movable sheave 10A is configured such that an end on the other side is fitted into an inner ring of the threaded shaft-ball bearing 5 to be integrally rotatable therewith. That is, the movable sheave 10A is configured to be integrally movable with the threaded shaft 4 of the ball screw 3 in the axial direction through the threaded shaft-ball bearing 5, and relatively rotatable around the threaded shaft 4.

The drive belt 12 is wound around the pulley 10, between the tapered one side surface of the fixed sheave 8A and the tapered one side surface of the movable sheave 10A. Both side surfaces of the drive belt 12 that face the one side surface of the fixed sheave 8A and the one side surface of the movable sheave 10A are formed into a tapered shape. The drive belt 12 is configured such that the tapered both side surfaces respectively come into contact with the fixed sheave 8A and the movable sheave 10A of the pulley 10, and transmit power by friction. In other words, the pulley 10 is configured such that positions (winding diameter D) where the both side surfaces of the drive belt 12 contact the fixed sheave 8A and the movable sheave 10A are determined, according to the spacing between the fixed sheave 8A and the movable sheave 10A.

The gear reducer 13 is configured to decelerate and output rotational power from the unillustrated electric motor. The gear reducer 13 includes the drive gear 13A which is a pinion gear, and a driven gear 13B that has more teeth than the drive gear 13A. The drive gear 13A and the driven gear 13B are formed of a sintered metal.

The drive gear 13A and the driven gear 13B are placed inside the casing 2 in a meshed state. The drive gear 13A is provided to be integrally rotatable with an output shaft of the unillustrated electric motor. Additionally, the drive gear 13A is rotatably supported by the drive gear-ball bearing holder 2B of the casing 2 through the drive gear-ball bearing 14. The drive gear 13A is formed such that its teeth width is larger than the movable range of the threaded shaft 4 of the ball screw 3. The driven gear 13B is provided to be integrally rotatable with, and integrally movable in the axial direction with the end on the other side of the threaded shaft 4 of the ball screw 3. The gear reducer 13 decelerates the rotation speed input from the unillustrated electric motor according to a speed reduction ratio determined by the number of teeth of the drive gear 13A and the driven gear 13B, and increases and outputs an output torque (rotary force). Note that although the gear reducer 13 of the present embodiment is configured of two gears including the drive gear 13A and the driven gear 13B, the present invention is not limited to this. Additionally, although the drive gear 13A and the driven gear 13B are formed of a sintered metal, the present invention is not limited to this.

When the unillustrated electric motor of the belt-type continuously variable transmission 1 configured in this manner receives input of a controlling current based on any one controllable factor from among torque, rotation speed, and turning angle from an unillustrated controller or the like, the output shaft of the electric motor rotates in one or the other direction in an operation mode depending on the controlling current. The belt-type continuously variable transmission 1 converts the input rotation speed and input torque of the electric motor into an output rotation speed and output torque according to the speed reduction ratio of the gear reducer 13, and transmits them to the ball screw 3. Then, in the belt-type continuously variable transmission 1, the threaded shaft 4 of the ball screw 3 in which the driven gear 13B is provided is rotated, and the threaded shaft 4 moves linearly in the axial direction by a movement amount determined by the rotation amount and the lead of the threaded shaft 4.

If the threaded shaft 4 of the ball screw 3 rotates counterclockwise when viewed from the pulley side, the movable sheave 10A of the pulley 10 comes close to the fixed sheave 8A in the belt-type continuously variable transmission 1 (see black solid arrow in Fig. 1). This controls the belt-type continuously variable transmission 1 in such a direction as to increase the winding diameter D of the drive belt 12. In other words, the belt-type continuously variable transmission 1 changes gear, so as to increase the rotation speed of the unillustrated downstream side (output side) pulley 10 around which the drive belt 12 is wound.

As shown in Fig. 2, if the threaded shaft 4 of the ball screw 3 rotates clockwise when viewed from the pulley side, the movable sheave 10A of the pulley 10 moves away from the fixed sheave 8A in the belt-type continuously variable transmission 1 (see black solid arrow in Fig. 2). This controls the belt-type continuously variable transmission 1 in such a direction as to decrease the winding diameter D of the drive belt 12. In other words, the belt-type continuously variable transmission 1 changes gear, so as to decrease the rotation speed of the unillustrated downstream side (output side) pulley 10 around which the drive belt 12 is wound.

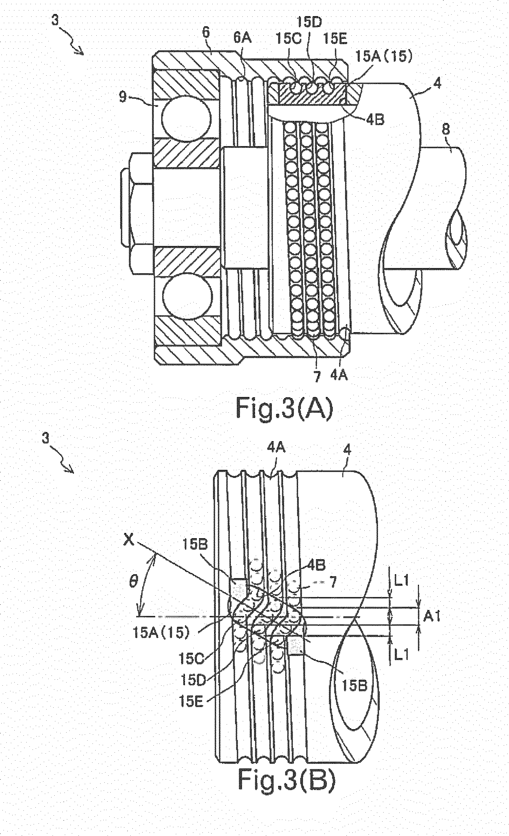

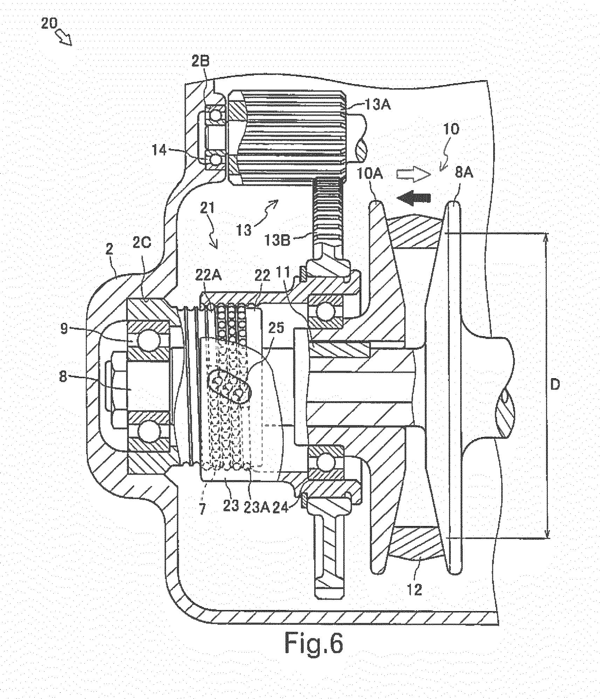

Hereinafter, a description will be given, with reference to Figs. 3(A) and 3(B), of the deflector member 15 provided in the threaded shaft 4 of the ball screw 3. Note that although the shaft-side raceway 4A formed in the threaded shaft 4 is a right-hand thread in the present embodiment, the present invention is not limited to this. Additionally, although the deflector member 15 of the ball screw 3 is provided in the threaded shaft 4, the present invention is not limited to this, and the deflector member 15 may be provided in the nut 6 instead (see Fig. 6).

As shown in Figs. 3(A) and 3(B), the deflector member 15 constitutes circulation grooves 15A to 15E that form circling paths from the rolling track. The deflector member 15 is made of a sintered alloy formed by plasticizing a metal powder and forming by an injection molding machine. The deflector member 15 is formed by metal injection molding (MIM), in which a mixture of a metal powder and a binder made of plastic and wax is pressed into a mold in a heated and fused state by an injection molding machine. A sintered alloy formed by such MIM can be easily and accurately formed into a desired shape and dimension, even when the shape is complex with a high degree of work.

An example of a metal powder is a material that can later be subjected to carburizing and quenching, such as SCM415 containing 0.13 wt% C (carbon), 0.21 wt% Ni (nickel), 1.1 wt% Cr (chromium), 0.04 wt% Cu (copper), 0.76 wt% Mn (manganese), 0.19 wt% Mo (molybdenum), 0.20 wt% Si (silicon), and Fe (iron) and the like. The deflector member 15 is prepared by adjusting the temperature of the carburizing and quenching, and the tempering. Other examples of the material of the deflector member 15 include a material (FEN8 of Japan Powder Metallurgy Association Standard) that contains 3.0 to 10.0 wt% Ni and has high workability and corrosion resistance, or precipitation hardening stainless steel SUS630 containing 0.07 wt% C, 17 wt% Cr, 4 wt% Ni, 4 wt% Cu, and Fe and the like. The surface hardness of SUS630 can be appropriately raised to a range of 20 to 33 HRC by a solution treatment, so that toughness and high hardness can be ensured.

When the deflector member 15 is formed of a carburizing material such as SCM415, the deflector member 15 is cured so that the surface hardness falls within the range of 30 to 40 HRC by adjusting the temperature of the carburizing and quenching and the tempering, or by carburizing and quenching. Additionally, an outer peripheral part on the outer diameter side of the deflector member 15 is tempered by an induction tempering device to set the hardness within the range of 15 to 30 HRC. This can prevent cracking when the deflector member 15 is swaged and fixed to the threaded shaft 4.

As shown in Fig. 3(B), the deflector member 15 is provided with a main body portion 15A and arm portions 15B that can be tightly fitted into a deflector window 4B, which is formed in such a manner as to cut out a part of the shaft-side raceway 4A of the threaded shaft 4. The arm portions 15B of the deflector member 15 extend in the circumferential direction from both ends of the main body portion 15A in the axial direction of the threaded shaft 4. The axial position of the deflector member 15 relative to the threaded shaft 4 is determined, by fitting the main body portion 15A and the arm portions 15B of the deflector member 15 into the deflector window 4B of the threaded shaft 4.

In the main body portion 15A of the deflector member 15, three circulation grooves including a first circulation groove 15C, a second circulation groove 15D, and a third circulation groove 15E are formed in this order from one side of the threaded shaft 4. The first circulation groove 15C, the second circulation groove 15D, and the third circulation groove 15E constitute a part of the shaft-side raceway 4A of the threaded shaft 4. The first circulation groove 15C connects, of an end face of the shaft-side raceway 4A formed on the edge of the deflector window 4B, one end face and another end face after proceeding one lap around the threaded shaft 4 from the one end face. In other words, the first circulation groove 15C connects the shaft-side raceway 4A shifted by a single thread after proceeding one lap around the threaded shaft 4, with the original shaft-side raceway 4A.

As shown in Fig. 3(A), the first circulation groove 15C is formed deep enough to allow the balls 7 to climb over a land part of the nut-side raceway 6A of the nut 6, and return to the same nut-side raceway 6A. Thus, the deflector member 15 uses the first circulation groove 15C to form a single circling path from the helical rolling track, which is configured of the shaft-side raceway 4A and the nut-side raceway 6A. Similarly, the deflector member 15 uses the second circulation groove 15D and the third circulation groove 15E to form circling paths from parts of the rolling track. In other words, the deflector member 15 divides a part of the rolling track into a plurality of circling paths within the axial length of the deflector member 15.

As shown in Fig. 3(B), the first circulation groove 15C, the second circulation groove 15D, and the third circulation groove 15E of the deflector member 15 are formed into the same shape. In addition, in side view of the threaded shaft 4, the first circulation groove 15C, the second circulation groove 15D, and the third circulation groove 15E are arranged on a straight line X whose center forms a predetermined angle θ (e.g., an arbitrary angle not smaller than 20 degrees and not larger than 60 degrees) with respect to the shaft center direction. In side view of the threaded shaft 4, the second circulation groove 15D is arranged at the intersection of the shaft center and the straight line X. In side view of the threaded shaft 4, the first circulation groove 15C and the third circulation groove 15E are arranged on positions on the straight line X that are symmetric with respect to the intersection of the shaft center and the straight line X. In other words, the first circulation groove 15C is shifted by a predetermined amount L1 to one side in the circumferential direction from the second circulation groove 15D. Similarly, the third circulation groove 15E is shifted by the predetermined amount L1 to the other side in the circumferential direction from the second circulation groove 15D. Hence, an end on one side in the circumferential direction of the first circulation groove 15C is shifted by the predetermined amount L1, to one side in the circumferential direction from an end on one side in the circumferential direction of the second circulation groove 15D. Similarly, an end on one side in the circumferential direction of the third circulation groove 15E is shifted by the predetermined amount L1, to the other side in the circumferential direction from an end on one side in the circumferential direction of the second circulation groove 15D. Additionally, an end on the other side in the circumferential direction of the first circulation groove 15C is shifted by the predetermined amount L1, to one side in the circumferential direction from an end on the other side in the circumferential direction of the second circulation groove 15D. Similarly, an end on the other side in the circumferential direction of the third circulation groove 15E is shifted by the predetermined amount L1, to the other side in the circumferential direction from an end on the other side in the circumferential direction of the second circulation groove 15D.

Both ends in the circumferential direction of the main body portion 15A are formed along ends in the circumferential direction of the first circulation groove 15C, the second circulation groove 15D, and the third circulation groove 15E. Both ends in the circumferential direction of the main body portion 15A are formed into shapes that extend along the straight line X, on which the first circulation groove 15C, the second circulation groove 15D, and the third circulation groove 15E are arranged. In the deflector member 15 configured in this manner, the shaft-side raceways 4A of the threaded shaft 4 are adjacent to one another in the axial direction of the threaded shaft 4, at ends on one side in the circumferential direction of the first circulation groove 15C and the second circulation groove 15D. Similarly, the shaft-side raceways 4A of the threaded shaft 4 are adjacent to one another in the axial direction of the threaded shaft 4, at ends on the other side in the circumferential direction of the second circulation groove 15D and the third circulation groove 15E. In other words, the deflector member 15 is configured such that only the deflector member 15 supports the balls 7 within a width A1 in the circumferential direction, from the end on one side in the circumferential direction of the third circulation groove 15E to the end on the other side in the circumferential direction of the first circulation groove 15C.

With this configuration, in the ball screw 3, the area of the circumferential width A1 of the part where only the deflector member 15 supports the balls 7 is reduced by predetermined amount L1 × 2, as compared to when the first circulation groove 15C, the second circulation groove 15D, and the third circulation groove 15E are arranged in parallel in the axial direction of the threaded shaft 4 (when the angle θ of the straight line X with respect to the shaft center direction is 0 in side view of the threaded shaft 4). In other words, since the shaft-side raceway 4A adjacent to the circulation groove shares the load applied to the connection part of the rolling surface of the threaded shaft 4 and the deflector member 15, load distribution is almost even. Accordingly, durability against radial loads and moment loads can be improved, without enlarging the overall form or providing a plurality of deflector members 15. In the belt-type continuously variable transmission 1 using the ball screw 3 of the present invention, a combination of an axial load, a radial load, and a moment load is applied on the ball screw 3 from the pulley 10, when the ball screw 3 moves the movable sheave 10A of the pulley 10 in the axial direction. However, since the deflector-type ball screw 3 of the present invention has improved durability against radial loads and moment loads without enlarging the overall form of the ball screw 3, durability can be improved without enlarging the overall form of the belt-type continuously variable transmission 1 or increasing the production cost.

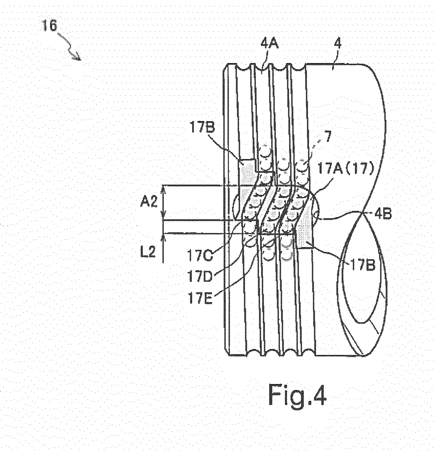

Next, a description will be given, with reference to Fig. 4, of a ball screw 16 which is a second embodiment of the ball screw of the present invention. Note that all of the ball screws in the following embodiments are applied in place of the ball screw 3 in the ball screws 3 illustrated in Figs. 1 to 3(B), and names, reference numerals, and signs used in the above description will be used to indicate the same parts. In the following embodiments, the same points as those in the present embodiment described above are not described in detail, and only different parts will mainly be described.

The ball screw 16 is configured to translate a rotational motion to a linear motion. A deflector member 17 is provided in a threaded shaft 4 of the ball screw 16.

In a main body portion 17A of the deflector member 17, three circulation grooves including a first circulation groove 17C, a second circulation groove 17D, and a third circulation groove 17E are formed in this order from one side of the threaded shaft 4. The first circulation groove 17C, the second circulation groove 17D, and the third circulation groove 17E of the deflector member 17 are formed in the same shape. Additionally, the first circulation groove 17C is shifted by a predetermined amount L2 to one side in the circumferential direction from the second circulation groove 17D. The third circulation groove 17E is arranged in parallel to the second circulation groove 17D, in the axial direction of the threaded shaft 4. Hence, an end on one side in the circumferential direction of the first circulation groove 17C is shifted by the predetermined amount L2, to one side in the circumferential direction from an end on one side in the circumferential direction of the second circulation groove 17D. Similarly, an end on the other side in the circumferential direction of the first circulation groove 17C is shifted by the predetermined amount L2, to one side in the circumferential direction from an end on the other side in the circumferential direction of the second circulation groove 17D.

Both ends in the circumferential direction of the main body portion 17A of the deflector member 17 are formed along ends in the circumferential direction of the first circulation groove 17C, the second circulation groove 17D, and the third circulation groove 17E. At the end on one side in the circumferential direction of the main body portion 17A, a part where the end on one side in the circumferential direction of the first circulation groove 17C is formed protrudes farther in the circumferential direction than the ends on one side of the second circulation groove 17D and the third circulation groove 17E. Similarly, at the end on the other side in the circumferential direction of the main body portion 17A, a part where the end on the other side in the circumferential direction of the first circulation groove 17C is formed is recessed deeper in the circumferential direction than the ends on the other side of the second circulation groove 17D and the third circulation groove 17E. In the deflector member 17 configured in this manner, shaft-side raceways 4A of the threaded shaft 4 are adjacent to one another in the axial direction of the threaded shaft 4, at the end on one side in the circumferential direction of the first circulation groove 17C. Similarly, the shaft-side raceways 4A of the threaded shaft 4 are adjacent to one another in the axial direction of the threaded shaft 4, at the end on the other side in the circumferential direction of the second circulation groove 17D. In other words, the deflector member 17 is configured such that the deflector member 17 alone supports balls 7, only within a width A2 in the circumferential direction from the ends on one side in the circumferential direction of the second circulation groove 17D and the third circulation groove 17E to the end on the other side in the circumferential direction of the first circulation groove 17C.

With this configuration, in the ball screw 16, the area of the circumferential width A2 of the part where only the deflector member 17 supports the balls 7 is reduced by the predetermined amount L2, as compared to when the first circulation groove 17C, the second circulation groove 17D, and the third circulation groove 17E are arranged in parallel in the axial direction of the threaded shaft 4. In other words, since the shaft-side raceway 4A adjacent to the circulation groove shares the load applied to the connection part of the rolling surface of the threaded shaft 4 and the deflector member 17, load distribution is almost even. Accordingly, durability against radial loads and moment loads can be improved, without enlarging the overall form or providing a plurality of deflector members 17. Note that although the first circulation groove 17C of the deflector member 17 of the present embodiment is shifted in the circumferential direction, the present invention is not limited to this. The deflector member 17 may be configured in any way, as long as at least one of the first circulation groove 17C, the second circulation groove 17D, and the third circulation groove 17E is shifted in the circumferential direction.

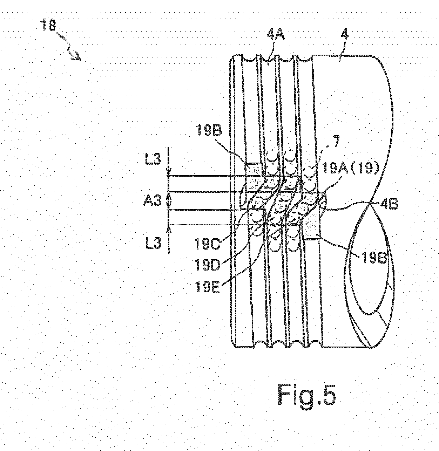

Next, a description will be given, with reference to Fig. 5, of a ball screw 18 which is a third embodiment of the ball screw of the present invention.

The ball screw 18 is configured to translate a rotational motion to a linear motion. A deflector member 19 is provided in a threaded shaft 4 of the ball screw 18.

In a main body portion 19A of the deflector member 19, three circulation grooves including a first circulation groove 19C, a second circulation groove 19D, and a third circulation groove 19E are formed in this order from one side of the threaded shaft 4. The circumferential position of an end on one side in the circumferential direction of the first circulation groove 19C is the same as the circumferential position of an end on one side in the circumferential direction of the second circulation groove 19D. Additionally, the first circulation groove 19C is shifted by a predetermined amount L3 to one side in the circumferential direction from the second circulation groove 19D. Hence, the first circulation groove 19C is configured such that the direction of the groove relative to a shaft-side raceway 4A differs from the direction of the groove of the second circulation groove 19D relative to the shaft-side raceway 4A. Similarly, the circumferential position of an end on the other side in the circumferential direction of the third circulation groove 19E is the same as the circumferential position of an end on the other side in the circumferential direction of the second circulation groove 19D. Additionally, the third circulation groove 19E is shifted by the predetermined amount L3 to the other side in the circumferential direction from the second circulation groove 19D. Hence, the third circulation groove 19E is configured such that the direction of the groove relative to the shaft-side raceway 4A differs from the direction of the groove of the second circulation groove 19D relative to the shaft-side raceway 4A.

Both ends in the circumferential direction of the main body portion 19A of the deflector member 19 are formed along ends in the circumferential direction of the first circulation groove 19C, the second circulation groove 19D, and the third circulation groove 19E. At the end on one side in the circumferential direction of the main body portion 19A, a part where the end on one side in the circumferential direction of the third circulation groove 19E is formed is recessed deeper in the circumferential direction than the ends on one side of the first circulation groove 19C and the second circulation groove 19D. Similarly, at the end on the other side in the circumferential direction of the main body portion 19A, a part where the end on the other side in the circumferential direction of the first circulation groove 19C is formed is recessed deeper in the circumferential direction than the ends on the other side of the second circulation groove 19D and the third circulation groove 19E. In the deflector member 19 configured in this manner, shaft-side raceways 4A of the threaded shaft 4 are adjacent to one another in the axial direction of the threaded shaft 4, at the end on one side in the circumferential direction of the second circulation groove 19D. Similarly, the shaft-side raceways 4A of the threaded shaft 4 are adjacent to one another in the axial direction of the threaded shaft 4, at the end on the other side in the circumferential direction of the second circulation groove 19D. In other words, the deflector member 19 is configured such that the deflector member 19 alone supports balls 7, only within a width A3 in the circumferential direction from the end on one side in the circumferential direction of the third circulation groove 19E to the end on the other side in the circumferential direction of the first circulation groove 19C.

With this configuration, in the ball screw 18, the area of the circumferential width A3 of the part where only the deflector member 19 supports the balls 7 is reduced by predetermined amount L3 × 2, as compared to when the first circulation groove 19C, the second circulation groove 19D, and the third circulation groove 19E are arranged in parallel in the axial direction of the threaded shaft 4. In other words, since the shaft-side raceway 4A adjacent to the circulation groove shares the load applied to the connection part of the rolling surface of the threaded shaft 4 and the deflector member 19, load distribution is almost even. Accordingly, durability against radial loads and moment loads can be improved, without enlarging the overall form or providing a plurality of deflector members 19. Note that although the end on the other side in the circumferential direction of the first circulation groove 19C and the end on one side in the circumferential direction of the third circulation groove 19E of the deflector member 19 of the present embodiment are shifted in the circumferential direction, the present invention is not limited to this. The deflector member 19 may be configured in any way, as long as at least one end in the circumferential direction of the first circulation groove 19C, the second circulation groove 19D, and the third circulation groove 19E is shifted in the circumferential direction.

Next, a description will be given, with reference to Fig. 6, of a belt-type continuously variable transmission 20, which is another embodiment of the belt-type continuously variable transmission 1 (see Fig. 1) of an embodiment using the ball screw of the present invention.

As shown in Fig. 6, the belt-type continuously variable transmission 20 is configured to change the speed reduction ratio by steplessly changing a winding diameter D of a drive belt wound around a pulley. The belt-type continuously variable transmission 20 includes a casing 2, a ball screw 21 which is a direct-acting mechanism, a drive shaft 8, a pulley 10, a drive belt 12, and a gear reducer 13.

The ball screw 21 is configured to translate a rotational motion to a linear motion. The ball screw 21 is configured of a threaded shaft 22, a nut 23, a plurality of balls 7, a deflector member 25, and the like.

The threaded shaft 22 is formed into a hollow cylinder. A single-threaded shaft-side raceway 22A formed of a right-hand thread that allows the balls 7 to roll on the outer peripheral surface of the threaded shaft 22, is formed on one side of the threaded shaft 22. A drive shaft-ball bearing 9 that supports the drive shaft on the inner periphery thereof is provided on the other side of the threaded shaft 22. The other side of the threaded shaft 22 is tightly fitted into a threaded shaft holder 2C of the casing 2, and is fixed to the casing 2.

The nut 23 is formed into a hollow cylinder that allows insertion of the threaded shaft 22. A nut-side raceway 23A that allows the balls 7 to roll on the inner peripheral surface thereof is formed with the same lead and pitch as the shaft-side raceway 22A of the threaded shaft 22, on one side of the nut 23. A nut-ball bearing 24 that has an enlarged inner diameter and supports the nut 23, is provided on an end on the other side of the nut 23. An outer ring of the nut-ball bearing 24 is fixed to an enlarged-diameter part of the nut 23. That is, the outer ring of the nut-ball bearing 24 is configured to be integrally rotatable with and around the axis of the nut 23, and to be immovable in the axial direction. The threaded shaft 22 is inserted into the nut 23, so that the shaft-side raceway 22A and the nut-side raceway 23A face each other. The deflector member 25 is fitted into a part of the inner peripheral surface on which the nut-side raceway 23A of the nut 23 is formed. The deflector member 25 is configured such that the balls 7 climb over a land part of the shaft-side raceway 22A of the threaded shaft 22, and return to the same shaft-side raceway 22A.

In the ball screw 21 configured in this manner, the fitting part on the other side of the threaded shaft 22 is tightly fitted into the threaded shaft holder 2C of the casing 2, and is held to be incapable of rotating relative to the casing 2. The ball screw 21 is configured such that when the nut 23 is rotated, the rotary force is transmitted to the threaded shaft 22 through the plurality of balls 7 stored in the rolling track, which is configured of the shaft-side raceway 22A and the nut-side raceway 23A. Since the threaded shaft 22 is fixed to the casing 2, the inclination of the shaft-side raceway 22A translates the rotational motion of the nut 23 to a linear motion in the axial direction of the threaded shaft 22. Thus, the nut 23 moves in the axial direction of the threaded shaft 22, inside the casing 2.

The movable sheave 10A is configured such that an end on the other side of a boss member is fitted into an inner ring of the nut-ball bearing 24 to be integrally rotatable therewith. That is, the movable sheave 10A is configured to be integrally movable with the nut 23 of the ball screw 21 in the axial direction through the nut-ball bearing 24, and relatively rotatable around the nut 23.

The gear reducer 13 is configured to decelerate and output rotational power from an electric motor. The gear reducer 13 includes a drive gear 13A which is a pinion gear, and a driven gear 13B that has more teeth than the drive gear 13A. The driven gear 13B is provided to be integrally rotatable with, and integrally movable in the axial direction with the end on the other side of the nut 23 of the ball screw 21.

In the belt-type continuously variable transmission 20 configured in this manner, the nut 23 of the ball screw 21 in which the driven gear 13B is provided is rotated, and the nut 23 moves linearly in the axial direction by a movement amount determined by the rotation amount and the lead of the threaded shaft 22 (see black solid arrow in Fig. 1). If the nut 23 of the ball screw 21 rotates counterclockwise when viewed from the pulley side, the movable sheave 10A of the pulley 10 comes close to a fixed sheave 8A in the belt-type continuously variable transmission 20 (see white solid arrow in Fig. 6). If the threaded shaft 22 of the ball screw 21 rotates clockwise when viewed from the pulley side, the movable sheave 10A of the pulley 10 moves away from the fixed sheave 8A in the belt-type continuously variable transmission 20 (see black solid arrow in Fig. 6).

Although the embodiments of the present invention have been described, the present invention is not limited in any way to the embodiments. The embodiments are merely examples, and other various embodiments may be made without departing from the gist of the present invention, as a matter of course. The scope of the present invention is described in the scope of claims, and includes equivalents of and all changes within the scope of claims.

### INDUSTRIAL APPLICABILITY

The present invention may be used in a ball screw.

### DESCRIPTION OF REFERENCE SIGNS

3: Ball screw
4: Threaded shaft
4A: Shaft-side raceway
6: Nut
6A: Nut-side raceway
7: Ball
15: Deflector member
15C: First circulation groove
15D: Second circulation groove
15E: Third circulation groove

## Claims

1. A ball screw (3) in which a threaded shaft (4) is inserted into a nut (6), a plurality of balls (7) are arranged in a rolling track configured of a raceway (4A) of the threaded shaft (4) and a raceway (6A) of the nut (6), and the threaded shaft (4) or the nut (6) is provided with a deflector member (15) that has a plurality of circulation grooves (15C, 15D, 15E) forming a circling path from the rolling track,
wherein the deflector member (15) is provided with a main body portion (15A) and arm portions (15B) that can be tightly fitted into a deflector window, which is formed in such a manner as to cut out a part of the shaft-side raceway (4A) of the threaded shaft (4), the arm portions (15B) extend in the circumferential direction from both ends of the main body portion in the axial direction of the threaded shaft (4)
**characterized in that**
an end on one side in a circumferential direction of at least one of the plurality of circulation grooves (15C, 15D, 15E) is shifted to one side or the other side in the circumferential direction from an end on one side in the circumferential direction of another circulation groove (15C, 15D, 15E), and **in that**
both ends in the circumferential direction of the main body portion (15A) of the deflector member (15) are formed into shapes that extend along a straight line (X), on which the plurality of circulation grooves (15C, 15D, 15E) are arranged.

2. The ball screw (3) according to claim 1, wherein
a center of length of the plurality of circulation grooves (15C, 15D, 15E) is placed on the straight line (X) that forms a predetermined angle (θ) with respect to a shaft center of the threaded shaft (4).

3. The ball screw (3) according to claim 1 or 2, wherein
a center of length of the plurality of circulation grooves (15C, 15D, 15E) is placed on the straight line (X) that forms an arbitrary angle (θ) not smaller than 20 degrees and not larger than 60 degrees, with respect to a shaft center of the threaded shaft (4).

## Patentansprüche

1. Kugelumlaufspindel (3), in der ein Gewindeschaft (4) in einer Mutter (6) eingesetzt ist, eine Vielzahl von Kugeln (7) in einer Wälzspur angeordnet sind, die von einer Laufbahn (4A) des Gewindeschafts (4) und einer Laufbahn (6A) der Mutter (6) gebildet wird, und der Gewindeschaft (4) oder die Mutter (6) mit einem Umlenkelement (15) ausgestattet ist, welches eine Vielzahl von Umlaufnuten (15C, 15D, 15E) aufweist, die eine Umlaufbahn von der Wälzspur bilden,
wobei das Umlenkungselement (15) mit einem Hauptkörperabschnitt (15A) und Armabschnitten (15B) ausgestattet ist, die in ein Umlenkfenster pressgepasst werden können, welches so ausgebildet ist, dass ein Teil der schaftseitigen Laufbahn (4A) des Gewindeschafts (4) ausgeschnitten ist, die Armabschnitte (15B) sich in der Umfangsrichtung von beiden Enden des Hauptkörperabschnitts in der axialen Richtung des Gewindeschafts (4) erstrecken,
**dadurch gekennzeichnet, dass**
ein Ende auf einer Seite in einer Umfangsrichtung von mindestens einer der Vielzahl der Umlaufnuten (15C, 15D, 15E) zu einer Seite oder der anderen Seite in der Umfangsrichtung von einem Ende auf einer Seite in der Umfangsrichtung einer anderen Umlaufnut (15C, 15D, 15E) versetzt ist, und dass beide Enden in der Umfangsrichtung des Hauptkörperabschnitts (15A) des Umlenkelements (15) in Formen ausgebildet sind, die sich entlang einer geraden Linie (X) erstrecken, auf der die Vielzahl der Umlaufnuten (15C, 15D, 15E) angeordnet sind.

2. Die Kugelumlaufspindel (3) nach Anspruch 1, wobei
eine Mitte einer Länge der Vielzahl der Umlaufnuten (15C, 15D, 15E) auf der geraden Linie (X) angeordnet ist, die einen vorgegebenen Winkel (θ) bezüglich einer Schaftmitte des Gewindeschafts (4) bildet.

3. Die Kugelumlaufspindel (3) nach Anspruch 1 oder 2, wobei
eine Mitte einer Länge der Vielzahl der Umlaufnuten (15C, 15D, 15E) auf der geraden Linie (X) angeordnet ist, die bezüglich einer Schaftmitte des Gewindeschafts (4) einen beliebigen Winkel (θ) bildet, der nicht kleiner als 20° und nicht größer als 60° ist.

## Revendications

1. Vis à billes (3) dans laquelle un axe fileté (4) est inséré dans un écrou (6), une pluralité de billes (7) est agencée dans un chemin de roulement constitué d'une bague (4A) de l'axe fileté (4) et d'une bague (6A) de l'écrou (6), et l'axe fileté (4) ou l'écrou (6) est pourvu d'un élément déflecteur (15) qui comporte une pluralité de rainures de circulation (15C, 15D, 15E) formant un chemin circulaire à partir du chemin de roulement,
dans laquelle l'élément déflecteur (15) est pourvu d'une portion de corps principal (15A) et de portions de bras (15B) qui peuvent être étroitement ajustées dans une fenêtre de déflecteur, qui est formée de manière à découper une partie de la bague côté axe (4A) de l'axe fileté (4), les portions de bras (15B) s'étendant en direction circonférentielle à partir des deux extrémités de la portion de corps principal en direction axiale de l'axe fileté (4),
**caractérisée en ce que**
une extrémité d'un côté en direction circonférentielle d'au moins une rainure de la pluralité de rainures de circulation (15C, 15D, 15E) est décalée d'un côté ou de l'autre côté en direction circonférentielle à partir d'une extrémité d'un côté en direction circonférentielle d'une autre rainure de circulation (15C, 15D, 15E), et **en ce que**
les deux extrémités en direction circonférentielle de la portion de corps principal (15A) de l'élément déflecteur (15) sont formées selon des formes qui s'étendent le long d'une ligne droite (X), sur laquelle la pluralité de rainures de circulation (15C, 15D, 15E) est agencée.

2. Vis à billes (3) selon la revendication 1, dans laquelle
un centre de longueur de la pluralité de rainures de circulation (15C, 15D, 15E) est placé sur la ligne droite (X) qui forme un angle prédéterminé (θ) par rapport à un centre d'axe de l'axe fileté (4).

3. Vis à billes (3) selon la revendication 1 ou 2, dans laquelle
un centre de longueur de la pluralité de rainures de circulation (15C, 15D, 15E) est placé sur la ligne droite (X) qui forme un angle arbitraire (θ) non inférieur à 20 degrés et non supérieur à 60 degrés, par rapport à un centre d'axe de l'axe fileté (4).
